# EUROPÄISCHE PATENTSCHRIFT

(11) **EP 2 075 108 B1**
(45) Veröffentlichungstag und Bekanntmachung des Hinweises auf die Patenterteilung: **25.09.2019**
(21) Anmeldenummer: 08171235.8
(22) Anmeldetag: 10.12.2008
(51) Int. Cl.: B29C 45/27

(54) **HEISSKANALDÜSE FÜR EINE SPRITZGIESSVORRICHTUNG**
HOT RUNNER NOZZLE FOR AN INJECTION MOULDING DEVICE
BUSE À CANAL CHAUD POUR UN DISPOSITIF DE MOULAGE PAR INJECTION

(30) Priorität: 27.12.2007 DE 102007063300
(43) Veröffentlichungstag der Anmeldung: 01.07.2009
(73) Patentinhaber: Heitec- Heisskanaltechnik GmbH, 35099 Burgwald-Bottendorf (DE)
(72) Erfinder: Schreck, Hans, 35099 Burgwald-Bottendorf (DE)
(74) Vertreter: advotec.

(56) Entgegenhaltungen:
- EP-A- 1 428 646
- WO-A1-2006/002518
- DE-A1- 3 919 493
- DE-A1- 10 353 696
- DE-A1- 19 723 374

## Beschreibung

Die vorliegende Erfindung betrifft eine Heißkanaldüse für eine Spritzgießvorrichtung mit mindestens einem in einer Düsenspitze endenden, mittels einer Heizung temperierbaren Düsenkanal für einen plastifizierten Kunststoff, wobei die Heißkanaldüse an einem Spritzgießwerkzeug oder dergleichen anbringbar ist.

Heißkanaldüsen der eingangs genannten Art zeichnen sich aufgrund der nebeneinander liegenden Anordnung von Düsenkanal und Heizung im Unterschied zu konventionellen Düsen, bei denen die Heizung konzentrisch zum Düsenkanal angeordnet ist, durch eine besonders schmale Ausführung aus, die den Einsatz dieser Heißkanaldüsen für Spritzgießwerkzeuge mit besonders eng nebeneinander liegend angeordneten Formnestern ermöglicht. Je nach den gegebenen An- oder Einbauverhältnissen kann es jedoch bei dem thermischen Ausdehnungsverhalten der Heißkanaldüsen aufgrund der nicht konzentrischen sondern seitlichen Anordnung der Heizung zum Düsenkanal zu einer mehr oder weniger ausgeprägten seitlichen Auslenkung der Heißkanaldüse kommen.

Die EP 1 428 646 A zeigt eine Heißkanaldüse mit einem Düsenkanal, der in einer Düsenspitze endet und mittels einer Heizung temperierbar ist. Die Heißkanaldüse ist an ist einem Spritzgießwerkzeug oder dergleichen anbringbar und die Heizung und der Düsenkanal sind in jeweils einem separaten Gehäuse der Heißkanaldüse seitlich nebeneinander vorgesehen. Das Gehäuse der Heißkanaldüse weist eine Ausnehmung auf, die angrenzend an den Düsenkanal angeordnet ist und zur Aufnahme der Heizung dient.

Die DE 197 23 374 A1 zeigt eine Heißkanaldüse mit den Merkmalen des Oberbegriffs des Patentanspruchs 1, insbesondere mit einem Düsenkanal und einer parallel zum Düsenkanal in einem Gehäuse angeordneten Heizung.

Aus der WO 2006/002518 A1 ist eine Ausführungsform einer Heißkanaldüse mit einer Düsenspitze bekannt. Die Heißkanaldüse umfasst eine Heizeinrichtung. Zudem weist die Heißkanaldüse einen temperierten Düsenkanal für einen plastifizierten Kunststoff auf. Des Weiteren ist die Heißkanaldüse an einem Spritzgießwerkzeug oder dergleichen anbringbar. Ferner wird ein Gehäuse von einer externen Heizung in Kanälen beheizt.

Die DE 39 19 493 A1 offenbart eine Heißkanaldüse mit einem Düsenkanal. Der Düsenkanal endet in einer Düsenspitze und ist mittels eines Plattenheizelements temperierbar. Die Heißkanaldüse ist an einem Spritzgießwerkzeug oder dergleichen anbringbar. Dabei teilen sich der Düsenkanal und das Plattenheizelement kein gemeinsames Gehäuse. Vielmehr sind beide als separate Elemente ausgeführt. Folglich ist das Plattenheizelement auch nicht in einem Beheizungskanal eines gemeinsamen Gehäuses aufgenommen. Weiter ist das Plattenheizelement nicht in einem Beheizungskanal aufgenommen, sondern wird vielmehr auf eine Außenfläche der Heizkanaldüse aufgeschraubt.

Die DE 103 53 696 A1 offenbart eine Heißkanaldüse mit zwei in jeweils einer Düsenspitze endenden Düsenkanälen. Die Düsenkanäle sind jeweils mittels einer Heizung temperierbar. Die Heißkanaldüse ist an einem Spritzgießwerkzeug oder dergleichen anbringbar. Sowohl die Heizung wie auch der Düsenkanal sind jeweils in einem separaten Gehäuse untergebracht. Die Heizung ist in einem Beheizungskanal ihres eigenen Gehäuses aufgenommen.

Der vorliegenden Erfindung liegt daher die Aufgabe zu Grunde, eine Heißkanaldüse der eingangs genannten Art vorzuschlagen, die die vorteilhafte schmale Ausführung ermöglicht, ohne dass es zu unerwünschten Beeinträchtigungen der einwandfreien Funktion der Heißkanaldüse aufgrund der asymmetrischen Beheizung des Düsenkanals kommt.

Diese Aufgabe wird durch eine Heißkanaldüse mit den Merkmalen des Anspruchs 1 gelöst.

Bei der erfindungsgemäßen Heißkanaldüse sind die Heizung und der Düsenkanal in einem gemeinsamen Gehäuse der Heißkanaldüse seitlich nebeneinander vorgesehen, wobei die Heizung in einem Beheizungskanal aufgenommen ist, wobei das Gehäuse zumindest eine Materialausnehmung aufweist, die zwischen dem Düsenkanal und der Heizung angeordnet ist und das Gehäuse angrenzend an den Düsenkanal und benachbart des Beheizungskanals in voneinander beabstandete Gehäusebereiche unterteilt.

Erfindungsgemäß ist demnach zwischen dem Düsenkanal und der Heizung eine Ausnehmung vorgesehen, die den Wärmeübergang von der Heizung auf den Düsenkanal durch das Material des Gehäuses beeinflusst, und zwar derart, dass durch die Ausnehmung der Wärmeübergangswiderstand im Bereich der Ausnehmung erhöht wird. Hierdurch wird erreicht, dass der benachbart zur Ausnehmung angeordnete Teil des Düsenkanals vergleichsweise geringer mit Wärme beaufschlagt wird, so dass in Längsrichtung des Düsenkanals oberhalb und unterhalb des Bereichs der Ausnehmung eine relativ höhere Beheizung des Düsenkanals erfolgt. Hierdurch lassen sich Temperaturprofile in Längsrichtung des Düsenkanals einstellen, die durch Vermeidung von Temperaturspitzen eine übermäßige Verformung der Heißkanaldüse entgegen wirken. Darüber hinaus lassen sich derartige Temperaturprofile auch nutzen, um die Viskosität des plastifizierten Kunststoffes im Düsenkanal lokal zu beeinflussen bzw. einzustellen. Hierdurch kann beispielsweise durch Verhinderung von Wärmesenken an problematischen Querschnittsübergängen im Bereich des Düsenkanals oder angrenzenden Bereichen des Kunststoffkanals einer Verstopfung bzw. einem unerwünschten Druckaufbau entgegen gewirkt werden.

Gemäß einer bevorzugten Ausführungsform der Erfindung ist die Materialausnehmung als zumindest ein in Gehäuselängsrichtung verlaufender Längsschlitz ausgebildet, der einen die Heizung aufnehmenden Beheizungsbereich des Gehäuses zwischen einem Gehäusefuß zum Anschluss an ein Spritzgießwerkzeug und einem Gehäusekopf zur Aufnahme einer Düsenspitze von einem Düsenkanalbereich, in dem der Düsenkanal ausgebildet ist, trennt. Mittels einer derartigen Ausführung lässt sich das normalerweise vom Gehäusefuß zu einem mittleren Abschnitt des Düsenkanals und ebenso von der Düsenspitze zu dem mittleren Abschnitt des Düsenkanals hin stark ansteigende Temperaturprofil mit Ausbildung eines "Temperaturbauchs" im mittleren Bereich des Düsenkanals in ein weitestgehend konstantes Temperaturprofil ändern.

Als vorteilhaft kann es sich auch erweisen, wenn die Materialausnehmung als zumindest ein quer zur Gehäuselängsrichtung verlaufender Querschlitz ausgebildet ist, der einen die Heizung aufnehmenden Beheizungsbereich des Gehäuses zwischen einem Gehäusefuß zum Anschluss an ein Spritzgießwerkzeug und einem Gehäusekopf zur Aufnahme einer Düsenspitze in zumindest zwei axial voneinander getrennte Beheizungsteilbereiche unterteilt. Mit einer derartigen Ausgestaltung ist es nicht nur möglich, den "Temperaturbauch" im mittleren Bereich des Düsenkanals zu beeinflussen, sondern darüber hinaus wird durch die axiale Unterteilung in zwei Beheizungsteilbereiche die mögliche Wärmeausdehnung des Beheizungsbereichs des Gehäuses in axialer Richtung erheblich reduziert. Hierdurch kann einer quer zur Längsrichtung des Düsenkanals gerichteten Temperaturverformung des Gehäuses gezielt entgegengewirkt werden.

Wenn gemäß einer weiteren bevorzugten Ausführungsform der Längsschlitz und der Querschlitz zur Ausbildung eines T-förmigen Schlitzes ineinander übergehend ausgebildet sind, ist es möglich, durch eine entsprechende Auswahl der anteiligen Schlitzlängen des Querschlitzes und des Längsschlitzes sowie der Schlitzweiten sowohl ein definiertes Temperaturprofil über dem Düsenkanal als auch eine definierte seitliche, also quer zum Düsenkanal ausgerichtete Verformung einzustellen.

Eine weitere Möglichkeit der Differenzierung hinsichtlich der durch die Schlitzausführung bestimmbaren Effekte auf das Temperaturprofil und das Verformungsverhaltes wird möglich, wenn in Gehäuselängsrichtung eine Mehrzahl von Schlitzen in Reihe axial voneinander beabstandet angeordnet sind.

Dabei können die Schlitze je nach Ausbildung des Gehäusequerschnitts sowohl äquidistant angeordnet sein als auch zur Erzeugung eines definierten Wärmeübertragungsprofils unterschiedliche axiale Abstände zueinander aufweisen.

Eine weitere Möglichkeit zur Beeinflussung des Temperaturprofils sowie des Verformungsverhaltens des Gehäuses besteht darin, die Heizung als stabförmigen, in einer zum Düsenkanal parallelen Aufnahmebohrung angeordneten Heizkörper auszubilden, der entsprechend den axialen Abständen der Schlitze ausgebildete Heizkörpersegmente aufweist. Somit ist es möglich, die einzelnen Heizkörpersegmente so auszugestalten, dass sie jeweils vollständig in den durch die Schlitze voneinander getrennten Gehäuseteilbereichen aufgenommen sind.

Wenn das Gehäuse T-förmig ausgebildet ist mit einem als Sockelstück ausgebildeten Gehäusefuß, der gegenüber einem den Düsenkanal und die Heizung aufnehmenden Schaftstück einen größeren Materialquerschnitt aufweist, lassen sich die erfindungsgemäßen, vorzugsweise als Schlitze ausgebildeten Materialausnehmungen besonders vorteilhaft einsetzen, um der Ausbildung einer Wärmesenke im Übergangsbereich zwischen dem Sockelstück und dem Schaftstück gezielt entgegen zu wirken. Somit lassen sich die Auswirkungen der konstruktionsbedingten Wärmesenke auf die Viskosität des im Düsenkanal transportierten plastifizierten Kunststoffes und die seitliche Verformung des Schaftstücks gezielt beeinflussen bzw. abmildern.

Nachfolgend werden bevorzugte Ausführungsformen der Heißkanaldüse anhand der Zeichnung näher erläutert.

Es zeigen:
**Fig. 1** eine Heißkanaldüse mit einer zwischen einem Düsenkanal und einer Heizung angeordneten Ausnehmung in Längsschnittdarstellung;
**Fig. 2** ein Diagramm zur Darstellung des Temperaturverlaufs über die Düsenkanalachse;
**Fig. 3** die in **Fig. 1** dargestellte Heißkanaldüse in Draufsicht;
**Fig. 4** eine Heißkanaldüse in einer weiteren Ausführungsform mit einer als T-förmiger Schlitz ausgebildeten Ausnehmung;
**Fig. 5** eine Heißkanaldüse in einer weiteren Ausführungsform mit einer Mehrzahl von T-förmigen Ausnehmungen.

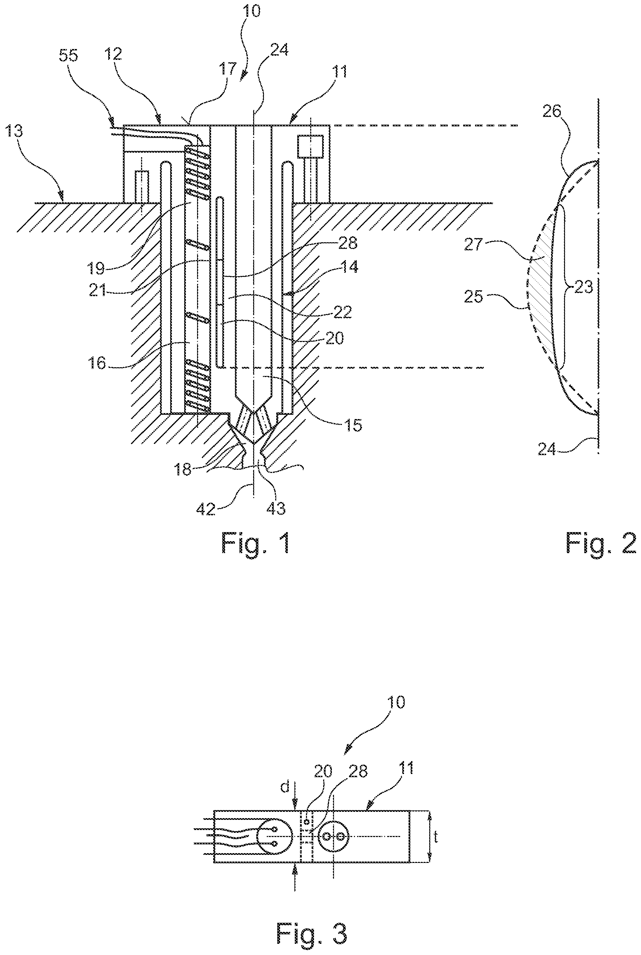

**Fig. 1** zeigt eine Heißkanaldüse 10 mit einem Gehäuse 11, das ein Sockelteil 12 zur Befestigung an einem Spritzgießwerkzeug 13 und einen Schaftteil 14 aufweist, der parallel nebeneinander angeordnet und sich in Längsrichtung des Gehäuses 11 erstreckend einen Düsenkanal 15 und einen Beheizungskanal 16 aufweist.

Der Düsenkanal 15 erstreckt sich von einer Anschlussfläche 17 am Sockelteil 12, an die eine hier nicht näher dargestellte Schmelzezuführung anschließbar ist, bis zu einer am freien Ende des Schaftteils 14 angeordneten Düsenspitze 18.

Der Beheizungskanal 16 ist als Durchgangskanal ausgebildet und dient, wie in **Fig. 1** dargestellt, zur Aufnahme eines vorzugsweise als elektrische Widerstandsheizung ausgeführten, stabförmigen Heizkörpers 19, der über eine in den Sockelteil 12 seitlich eingeführte Versorgungsleitung 55 mit Strom versorgt wird.

Wie ferner aus **Fig. 1** zu ersehen ist, ist das Gehäuse 11 in einem Bereich zwischen dem Düsenkanal 15 und dem Beheizungskanal 16 mit einer hier als Längsschlitz 20 ausgebildeten Ausnehmung versehen, die eine thermische Isolierung zwischen einem angrenzenden Wandungsbereich 21 des Beheizungskanals 16 und einem benachbarten Wandungsbereich 22 des Düsenkanals 15 ausbildet. Der Längsschlitz 20 bewirkt aufgrund seiner thermisch isolierenden Wirkung eine relative Abkühlung eines Mittelabschnitts 23 des Düsenkanals 15, wie anhand der qualitativen Darstellung des Temperaturverlaufs über eine Düsenkanalachse 24 in **Fig. 2** dargestellt.

**Fig. 2** zeigt mit strichpunktiertem Verlauf einen Temperaturprofil 25, wie er sich bei einem der in **Fig. 1** dargestellten Heißkanaldüse 10 entsprechenden, jedoch ohne Längsschlitz 20 ausgestalteten Heißkanaldüse einstellt. Wie durch den Vergleich mit dem Temperaturprofil 26 in **Fig. 2** deutlich wird, kommt es aufgrund der durch den Längsschlitz 20 ausgebildeten Isolationsstrecke zu einer Reduzierung eines im Mittelabschnitt 23 des Düsenkanals 15 ausgebildeten "Temperaturbauchs" 27.

Aus dem Darstellungszusammenhang zwischen den **Fig. 1** und **2** wird deutlich, dass die Länge des Längsschlitzes 20 in unmittelbarem Zusammenhang mit der Ausbildung des in **Fig. 2** dargestellten Temperaturprofils 26 über der Düsenkanalachse 27 steht.

Wie insbesondere aus **Fig. 3** zu ersehen ist, ist der Längsschlitz 20 so ausgebildet, dass er eine der Dicke d des Gehäuses 11 entsprechende Tiefe t aufweist, also den gesamten Querschnitt durchdringt. Je nachdem in welchem Umfang eine Beeinflussung des sich über die Düsenkanalachse 24 einstellenden Temperaturprofils 26 gewünscht wird, ist es auch denkbar, den Längsschlitz 20 nicht, wie in **Fig. 3** dargestellt, durchgängig auszubilden, sondern hier strichpunktiert dargestellte Materialstege 28 vorzusehen, die eine gezielte Reduzierung der isolierenden Wirkung des Längsschlitzes 20 an diskreten Stellen ermöglicht.

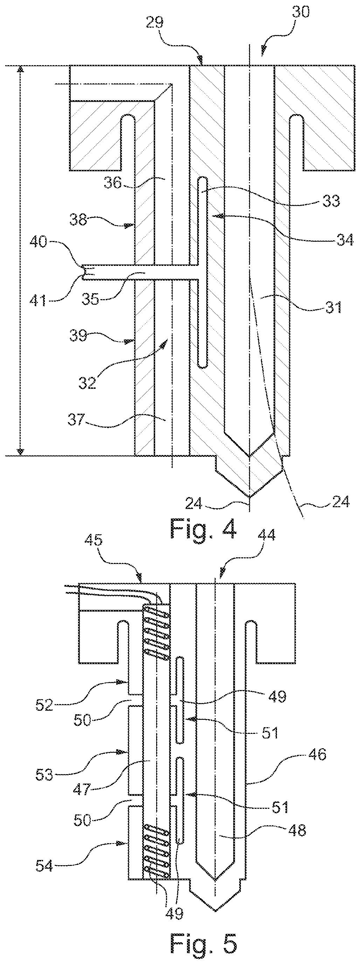

**Fig. 4** zeigt ein Gehäuse 29 einer Heißkanaldüse 30, das zwischen einem Düsenkanal 31 und einem Beheizungskanal 32 einen Längsschlitz 33 aufweist, der zur Ausbildung eines insgesamt T-förmigen Schlitzes 34 in einen Querschlitz 35 übergeht. Der Querschlitz 35 definiert mit der Schlitzweite a einen Ausdehnungsspalt, der den Beheizungskanal 32 in zwei voneinander thermisch getrennte Beheizungskanalabschnitte 36 und 37 aufteilt.

Bei einer Beheizung der Heißkanaldüse 30 vermittels eines in den Beheizungskanal 32 eingesetzten Heizkörpers erfolgt eine Erwärmung der im Bereich des Querschlitzes 35 annähernd hülsenförmig ausgeführten Kanalwandungen 38 und 39 der Beheizungskanalabschnitte 36 und 37 mit der Folge, dass aufgrund der temperaturbedingten axialen Ausdehnung der Beheizungskanalabschnitte 36 und 37 freie Stirnränder 40, 41 der Beheizungskanalabschnitte 36 und 37 sich unter einer Reduzierung der Schlitzweite a einander annähern. Aufgrund der freien axialen Ausdehnungsmöglichkeit der Stirnränder 40, 41 kann die Ausbildung eines thermisch bedingten Biegemoments um eine im vorliegenden Fall senkrecht zur Zeichnungsebene verlaufende Biegeachse, das zu einer in **Fig. 4** strichpunktiert dargestellten seitlichen Auslenkung des Düsenkanals 31 bzw. der Düsenkanalachse 24 führt, weitestgehend verhindert werden. Eine derartige seitliche Auslenkung des Düsenkanals könnte ansonsten die gewünschte koaxiale Ausrichtung der Düsenkanalachse 24 zu einer Formachse 42 eines im Spritzgießwerkzeug 13 ausgebildeten Formnestes 43 (**Fig. 1**) beeinträchtigen mit den bekannten nachteiligen Auswirkungen für das Spritzgießprodukt.

**Fig. 5** zeigt in einer weiteren Ausführungsform eine Heißkanaldüse 44 mit einem Gehäuse 45, das in einem Schaftteil 46 einen Beheizungskanal 47 aufweist, der benachbart einem Düsenkanal 48 zwei jeweils aus einem Längsschlitz 49 und einem Querschlitz 50 zusammengesetzte T-Schlitze 51 aufweist, die den Beheizungskanal 47 in insgesamt drei Beheizungskanalabschnitte 52, 53 und 54 unterteilen.

## Patentansprüche

1. Heißkanaldüse (10, 30, 44) mit mindestens einem in einer Düsenspitze (18) endenden, mittels einer Heizung (19) temperierbaren Düsenkanal (15, 31, 48) für einen plastifizierten Kunststoff, wobei die Heißkanaldüse (10, 30, 44) an einem Spritzgiesswerkzeug (13) oder dergleichen anbringbar ist, **dadurch gekennzeichnet,**
**dass** die Heizung (19) und der Düsenkanal (15, 31, 48) in einem gemeinsamen Gehäuse (11) der Heißkanaldüse (10, 30, 44) seitlich nebeneinander vorgesehen sind,
**dass** die Heizung (19) in einem Beheizungskanal (16) aufgenommen ist, und
**dass** das Gehäuse (11) zumindest eine Materialausnehmung aufweist, die zwischen dem Düsenkanal (15, 31, 48) und der Heizung (19) angeordnet ist und das Gehäuse (11) angrenzend an den Düsenkanal (15, 31, 48) und benachbart des Beheizungskanals (16) in voneinander beabstandete Gehäusebereiche unterteilt.

2. Heißkanaldüse nach Anspruch 1,
**dadurch gekennzeichnet,**
**dass** die Materialausnehmung als zumindest ein in Gehäuselängsrichtung verlaufender Längsschlitz (20, 33, 49) gebildet ist, der einen die Heizung (19) aufnehmenden Beheizungsbereich des Gehäuses zwischen einem Gehäusefuß (12) zum Anschluss an das Spritzgießwerkzeug (13) und einem Gehäusekopf zur Aufnahme der Düsenspitze (18) von einem Düsenkanalbereich, in dem der Düsenkanal (15, 31, 48) ausgebildet ist, trennt.

3. Heißkanaldüse nach Anspruch 1,
**dadurch gekennzeichnet,**
**dass** die Materialausnehmung als zumindest ein quer zur Gehäuselängsrichtung verlaufender Querschlitz (35,50) ausgebildet ist, der einen die Heizung (19) aufnehmenden Beheizungsbereich des Gehäuses zwischen einem Gehäusefuß (12) zum Anschluss an das Spritzgießwerkzeug (13) und einen Gehäusekopf zur Aufnahme der Düsenspitze (18) in zumindest zwei axial voneinander getrennte Beheizungsteilbereiche (36, 37; 52, 53, 54) unterteilt.

4. Heißkanaldüse nach einem der vorangehenden Ansprüche,
**dadurch gekennzeichnet,**
**dass** der Längsschlitz (33, 49) und der Querschlitz (35, 50) zur Ausbildung eines T-förmigen Schlitzes (34, 51) ineinander übergehend ausgebildet sind.

5. Heißkanaldüse nach Anspruch 3 oder 4,
**dadurch gekennzeichnet,**
**dass** in Gehäuselängsrichtung eine Mehrzahl von Schlitzen (33, 49; 34, 51) in Reihe axial voneinander beabstandet angeordnet sind.

6. Heißkanaldüse nach Anspruch 5,
**dadurch gekennzeichnet,**
**dass** die Schlitze (33, 49; 34, 51) äquidistant angeordnet sind.

7. Heißkanaldüse nach Anspruch 5,
**dadurch gekennzeichnet,**
**dass** die Schlitze (33, 49; 34, 51) zur Erzeugung eines definierten Wärmeübertragungsprofils unterschiedliche axiale Abstände zueinander aufweisen.

8. Heißkanaldüse nach einem der Ansprüche 5 bis 7,
**dadurch gekennzeichnet,**
**dass** die Heizung als stabförmige, in einer zum Düsenkanal parallelen Beheizungskanal angeordneter Heizkörper ausgebildet ist, der entsprechend den axialen Abständen der Schlitze ausgebildete Heizkörpersegmente aufweist.

9. Heißkanaldüse nach einem der vorangehenden Ansprüche,
**dadurch gekennzeichnet,**
**dass** das Gehäuse T-förmig ausgebildet ist mit einem als Sockelteil (12) ausgebildeten Gehäusefuß, der gegenüber einem den Düsenkanal (15, 31, 48) und die Heizung (19) aufnehmenden Schaftteil (14) einen größeren Materialquerschnitt aufweist.

## Claims

1. A hot runner nozzle (10, 30, 44) comprising at least one nozzle duct (15, 31, 48) for a plasticized plastic, which ends in a nozzle tip (18) and which can be temperature-controlled by means of a heater (19), wherein the hot runner nozzle (10, 30, 40) can be attached to an injection molding tool (13) or the like,
**characterized in**
**that** the heater (19) and the nozzle duct (15, 31, 48) are provided in a common housing (11) of the hot runner nozzle (10, 30, 44) laterally next to one another,
**that** the heater (19) is accommodated in a heating duct (16), and that the housing (11) encompasses at least one material recess, which is arranged between the nozzle duct (15, 31, 48) and the heater (19) and which divides the housing (11) adjacent to the nozzle duct (15, 31, 48) and adjoining the heater duct (16) into housing regions, which are spaced apart from one another.

2. The hot runner nozzle according to claim 1,
**characterized in**
**that** the material recess is embodied as at least one longitudinal slot (20, 33, 49), which runs in the longitudinal direction of the housing, which separates a heating region of the housing, which accommodates the heater (19), between a housing base (12) for connection to the injection molding tool (13) and a housing head for accommodating the nozzle tip (18) from a nozzle duct region, in which the nozzle duct (15, 31, 48) is formed.

3. The hot runner nozzle according to claim 1,
**characterized in**
**that** the material recess is embodied as at least one transverse slot (35, 50), which runs transversely to the longitudinal direction of the housing, which divides a heating region of the housing, which accommodates the heater (19), between a housing base (12) for connection to the injection molding tool (13) and a housing head for accommodating the nozzle tip (18) into at least two partial heating regions (36, 37; 52, 53, 54), which are axially separated from one another.

4. The hot runner nozzle according to any one of the preceding claims,
**characterized in**
**that** the longitudinal slot (33, 49) and the transverse slot (35, 50) are embodied so as to merge for forming a T-shaped slot (34, 51).

5. The hot runner nozzle according to claim 3 or 4,
**characterized in**
**that** a plurality of slots (33, 49; 34, 51) is arranged in the longitudinal direction of the housing in a row so as to be axially spaced apart from one another.

6. The hot runner nozzle according to claim 5,
**characterized in**
**that** the slots (33, 49; 34, 51) are arranged so as to be equally spaced.

7. The hot runner nozzle according to claim 5,
**characterized in**
**that** the slots (33 , 49 ; 34, 51) have different axial distances to one another for the purpose of generating a defined heat transfer profile.

8. The hot runner nozzle according to any one of the claims 5 to 7,
**characterized in**
**that** the heater is embodied as a rod-shaped heater, which is arranged in a heating duct, which is parallel to the nozzle duct, said heater encompassing heater segments, which are embodied according to the axial distances of the slots.

9. The hot runner nozzle according to any one of the preceding claims,
**characterized in**
**that** the housing is embodied in a T-shaped manner comprising a housing base, which is embodied as a base part (12), which has a larger material cross section as compared to a piston part (14), which accommodates the nozzle duct (15, 31, 48) and the heater (19).

## Revendications

1. Buse à canal chaud (10, 30, 44) ayant au moins un canal de buse (15, 31, 48) pour une matière plastique plastifiée, le canal de buse débouchant dans un embout de buse (18) et étant tempérable au moyen d'un chauffage (19), la buse à canal chaud (10, 30, 44) étant fixable à un outil de moulage par injection (13) ou un élément similaire, **caractérisée en ce que**
le chauffage (19) et le canal de buse (15, 31, 48) sont prévus latéralement côté à côté dans un boîtier (11) commun de la buse à canal chaud (10, 30, 44),
que le chauffage (19) est logé dans un canal de chauffage (16), et que le boîtier (11) a au moins un évidement de matériau qui est disposé entre le canal de buse (15, 31, 48) et le chauffage (19) et qui divise le boîtier (11) adjacent au canal de buse (15, 31, 48) et adjacent au canal de chauffage (16) en zones du boîtier qui sont espacées les unes des autres.

2. Buse à canal chaud selon la revendication 1,
**caractérisée en ce que**
l'évidement de matériau est réalisé comme au moins une fente longitudinale (20, 33, 49) qui s'étende dans la direction longitudinale du boîtier et qui sépare une zone de chauffage du boîtier, qui loge le chauffage (19), entre une base de boîtier (12) pour la connexion à l'outil de moulage par injection (13) et une tête de boîtier pour le logement de l'embout de buse (18) d'une zone du canal de buse dans laquelle le canal de buse (15, 31, 48) est formé.

3. Buse à canal chaud selon la revendication 1,
**caractérisée en ce que**
l'évidement de matériau est réalisé comme au moins une fente transversale (35, 50) qui s'étende transversalement à la direction longitudinale du boîtier qui divise une zone de chauffage du boîtier, qui loge le chauffage (19), entre une base de boîtier (12) pour la connexion à l'outil de moulage par injection (13) et une tête de boîtier pour le logement de l'embout de buse (18) en au moins deux sous-zones de chauffage (36, 37 ; 52, 53, 54) qui sont axialement séparés l'une de l'autre.

4. Buse à canal chaud selon l'une quelconque des revendications précédentes,
**caractérisée en ce que**
la fente longitudinale (33, 49) et la fente transversale (35, 50) sont reliées pour former une fente (34, 51) en forme de T.

5. Buse à canal chaud selon la revendication 3 ou 4,
**caractérisée en ce que**
plusieurs fentes (33, 49 ; 34, 51) sont disposées de manière axialement espacée les unes des autres dans une rangée dans la direction longitudinale du boîtier.

6. Buse à canal selon la revendication 5,
**caractérisée en ce que**
les fentes (33, 49 ; 34, 51) sont disposées de manière équidistante.

7. Buse à canal selon la revendication 5,
**caractérisée en ce que**
les fentes (33, 49 ; 34, 51) ont des distances axiales différentes les unes par rapport aux autres pour générer un profile de transmission de chaleur défini.

8. Buse à canal selon l'une quelconque des revendications 5 à 7,
**caractérisée en ce que**
le chauffage est réalisé comme corps de chauffe en forme de tige qui est disposé dans un canal de chauffage qui est parallèle au canal de buse, le corps de chauffe ayant des segments du corps de chauffe réalisés en fonction des distances axiales des fentes.

9. Buse à canal selon l'une quelconque des revendications précédentes,
**caractérisée en ce que**
le boîtier est réalisé en forme de T ayant une base de boîtier réalisé comme partie de base (12) qui a une section transversale du matériau plus grande par rapport à une partie de tige (14) qui loge le canal de buse (15, 31, 48) et le chauffage (19).
